# EUROPÄISCHE PATENTSCHRIFT

(11) **EP 1 104 726 B1**
(45) Veröffentlichungstag und Bekanntmachung des Hinweises auf die Patenterteilung: **14.09.2005**
(21) Anmeldenummer: 00123466.5
(22) Anmeldetag: 07.11.2000
(51) Int. Cl.: B60R 21/34

(54) **Sicherheitseinrichtung an einem Fahrzeug zum Schutz von Fussgängern**
Vehicle provided with a safety device for the protection of pedestrians
Véhicule équipé d'un dispositif de sécurité protégeant les piétons

(30) Priorität: 01.12.1999 DE 19957869
(43) Veröffentlichungstag der Anmeldung: 06.06.2001
(73) Patentinhaber: Volkswagen Aktiengesellschaft, 38436 Wolfsburg (DE)
(72) Erfinder: Gevers, Dennis, 38106 Braunschweig (DE); Sinnhuber, Ruprecht, Dipl.-Ing., 38518 Gifhorn (DE)

(56) Entgegenhaltungen:
- EP-A- 0 926 018
- DE-A- 2 922 893
- DE-A- 19 721 565
- PATENT ABSTRACTS OF JAPAN vol. 2000, no. 01, 31. Januar 2000 (2000-01-31) & JP 11 291948 A (HONDA MOTOR CO LTD), 26. Oktober 1999 (1999-10-26)

## Beschreibung

Die Erfindung betrifft eine Sicherheitseinrichtung an einem Fahrzeug zum Schutz von Fußgängern nach dem Oberbegriff des Anspruchs 1.

Es sind bereits eine Reihe von derartigen im Fronthaubenbereich von Fahrzeugen, insbesondere von Personenkraftfahrzeugen, vorgesehenen Sicherheitseinrichtungen bekannt, die bei einer Kollision des Fahrzeugs mit einem Fußgänger eine mögliche Beeinträchtigung des Fußgängers reduzieren sollen.

So ist aus der gattungsgemäßen DE 27 11 339 A1 eine Sicherheitseinrichtung mit einer zwischen einer Fronthauben-Ruheposition und einer Fronthauben-Öffnungsposition verschwenkbaren Fronthaube bekannt, die sich im Fronthauben-Randbereich über wenigstens ein Abstützelement an einer Fahrzeugkarosserie abstützt. Dokument JP 11 291948 offenbart eine Sicherheitseinrichtung nach dem Oberbegriff des Anspruchs 1.

Konkret ist hier auf ein Seitenteil einer Fahrzeugkarosserie ein Gummiprofil aufgesetzt, dessen Oberseite mit einem Teilbereich als nach außen abfallende Schrägfläche ausgebildet ist. Der sich an diese Schrägfläche zur Innenseite hin anschließende Teilbereich der Oberseite bildet einen Sattel, auf dem in der Fronthauben-Ruheposition die Fronthaube mit dem Fronthauben-Randbereich aufliegt und abgestützt ist. Unter diesem Sattelbereich des Gummiprofils ist ein Hohlraum ausgebildet, der das Gummiprofil nach unten nachgiebig macht. Die Fronthaube ist in ihrem Randbereich gewölbt und nach unten gezogen, so dass die Fronthaubenkante tiefer liegt als die Fronthaubenoberseite. Diese Wölbung ist dabei so ausgebildet, dass an der Innenseite der Fronthaube eine Schrägfläche ausgebildet ist. Bei einem Fußgängeraufprall auf die Fronthaube wird dieser gewölbte Randbereich der Fronthaube durch die auf die Fronthaube einwirkenden Aufprallkräfte nach außen gedrängt, wodurch der Fronthauben-Randbereich aus dem Sattel des Gummiprofils herausgedrängt wird und die Schrägfläche des Wölbungsbereichs des Fronthauben-Randbereichs entlang der Schrägfläche des Gummiprofils nach unten gleiten kann.

Zwar steht bei einem derartigen Aufbau der Sicherheitseinrichtung die Fronthaube durch die nach unten gezogene Wölbung des Fronthauben-Randbereichs ein ausreichender Verformungsweg zur Verfügung, nachteilig hierbei ist jedoch, dass mit einem derartigen Aufbau keine Energieabsorption mit einer gezielten Kraft-Weg-Kennung durch gezieltes Absenken der Fronthaube möglich ist. Dadurch kann auch kein bestimmtes Beschleunigungs-Zeit-Verhalten für den aufprallenden Fußgänger aufgrund einer fehlenden und gezielten Krafteinleitung und Kraftumleitung erzielt werden, wie dies für eine gezielte Energieabsorption erforderlich ist.

Ähnlich verhält es sich bei der in der DE 197 21 565 A1 beschriebenen Sicherheitseinrichtung an einem Fahrzeug zum Schutz von Fußgängern, bei der in Verbindung mit einem Fronthaubenschloss vorgesehen ist, dass die Fronthaube mittels einer Fronthauben-Aufstellfeder in eine Aufprallposition angehoben wird, wodurch der Deformationsweg für eine energieabsorbierende Fronthaubenverformung bei einer Fußgängerkollision vergrößert wird. Auch hier ist keine Energieabsorption mit einer gezielten Kraft-Weg-Kennung vorgesehen, so dass auch kein bestimmtes Beschleunigungs-Zeit-Verhalten für den aufprallenden Fußgänger erreicht werden kann.

Weiter ist aus der EP 0 641 707 A2 eine Sicherheitseinrichtung an einem Fahrzeug bekannt, bei der zu beiden Seiten eines Fahrzeugs im Vorderwagenbereich an der Fahrzeugkarosserie jeweils ein Rahmenelement angebracht ist, an dem die Fronthaube lösbar festgelegt ist. Dieses Rahmenelement ist in etwa viereckig ausgebildet und weist an einem der Fronthaube zugewandten oberen Rahmenteil jeweils einen Puffer auf, auf denen in einer Fronthauben-Ruheposition die Fronthaube aufliegt. Im Falle eines Fußgängeraufpralls auf die Fronthaube klappt das Rahmenelement in Fahrzeuglängsrichtung gesehen zusammen, wodurch die Fronthaube nach hinten in Richtung hinterer Vorderwagenbereich verschoben wird. Gleichzeitig wird durch dieses Zusammenklappen der Rahmenelemente erreicht, dass die Fronthaube um die Puffer verschwenkt werden kann, wodurch die Fronthaube im Bereich des hinteren Vorderwagenbereichs von der Fahrzeugkarosserie zur Ausbildung eines Deformationsabstandes zwischen der Fronthaube und den darunter angeordneten, nicht deformierbaren Fahrzeugteilen, wie z.B. einer Brennkraftmaschine, abgehoben wird. Das Zusammenklappen der Rahmenelemente dient hier somit nur dazu, die Fronthaube bei einem Fußgängeraufprall aus einer Fronthauben-Ruheposition in eine Fronthauben-Aufprallposition anzuheben. Eine gezielte Energieabsorption in Verbindung mit der Erzielung eines bestimmten Beschleunigungs-Zeit-Verhaltens für den aufprallenden Fußgänger ist mit diesen Rahmenelementen nicht vorgesehen. Zudem sind derartige Rahmenelemente insgesamt relativ stabil zu dimensionieren, um die beim Verschwenken der schweren Fronthaube um die Puffer der Rahmenelemente auftretenden Kräfte aufnehmen zu können. Für eine Energieabsorption ist ein derartiger Aufbau daher insgesamt nicht geeignet.

Aufgabe der Erfindung ist es daher, eine Sicherheitseinrichtung an einem Fahrzeug zum Schutz von Fußgängern zu schaffen, die bei einem Fußgängeraufprall eine Energieabsorption mit gezielter Kraft-Weg-Kennung ermöglicht.

Diese Aufgabe wird gelöst mit den Merkmalen des Anspruchs 1.

Gemäß Anspruch 1 ist das Abstützelement als ein wenigstens einteiliges Deformationselement ausgebildet. Die Fronthaube ist bei einem Fußgängeraufprall relativ zur Fahrzeugkarosserie unter Energieabsorption durch Deformation des Deformationselementes gezielt nach unten absenkbar dergestalt, dass das Deformationselement aus einer undeformierten Normalstellung in eine deformierte Deformationsstellung überführbar ist.

Durch das Vorsehen eines derartigen als Deformationselement ausgebildeten Abstützelementes, das bei einem Fußgängeraufprall auf die Fronthaube Energie absorbiert, ist eine Energieabsorption mit einer gezielten Kraft-Weg-Kennung durch gezieltes Absenken der Fronthaube möglich. Mit einem derartigen Aufbau kann daher durch eine gezielte Krafteinleitung und -umleitung im Falle eines Aufpralls vorteilhaft ein bestimmtes Beschleunigungs-Zeit-Verhalten des aufprallenden Fußgängers und damit eine kontrollierte Aufprallenergieabsorption erreicht werden. Insgesamt kann hier somit die Wucht eines Aufpralls gezielt und kontrolliert aufgefangen werden.

Vorteilhaft ist hier das Abstützelement somit in einer Doppelfunktion gleichzeitig auch als Deformationselement ausgebildet, so dass dieses Abstützelement in herkömmlicher Weise zur Abstützung der Fronthaube dient und im Falle eines Fußgängeraufpralls auf die Fronthaube die Funktion eines Deformationselementes für eine Energieabsorption mit gezielter Kraft-Weg-Kennung durch gezieltes Absenken der Fronthaube ermöglicht.

Desweiteren sind die Möglichkeiten hinsichtlich Lage und Ausbildung des Deformationselementes als Abstützelement für die Fronthaube vielfältig, wobei die unterschiedlichen diesbezüglichen Möglichkeiten einzeln oder aber auch in geeigneten Kombinationen realisiert werden können. So kann eine derartige Sicherheitsanordnung insbesondere auch in Verbindung mit einer Scharnieranordnung und/oder einer Schlossanordnung als Abstützelemente hergestellt werden. Damit ist ein derartiger Aufbau der Sicherheitseinrichtung insbesondere für eine Großserienfertigung, wie dies beim Automobilbau der Fall ist, geeignet, da hierdurch Sicherheitseinrichtungen herstellbar sind, die neben der Möglichkeit der gezielten Energieabsorption aufgrund der großen Variationsmöglichkeiten auch auf einfache und preiswerte Weise herstellbar und an unterschiedliche Fahrzeugtypen anpassbar sind.

Um bereits von vornherein einen ausreichenden Abstand als Deformationsabstand zwischen der Fronthaube und den darunterliegenden, nicht deformierbaren Fahrzeugteilen, wie zum Beispiel einer Brennkraftmaschine, zu schaffen, kann die Fronthaube in einer bevorzugten Ausführungsform in einer Fronthauben-Ruheposition beabstandet oberhalb einer Karosserieebene der Fahrzeugkarosserie angeordnet sein. Dies hat den Vorteil, dass keine zusätzlichen Maßnahmen vorgesehen werden müssen, um die Fronthaube im hinteren Vorderwagenbereich aus der Fronthauben-Ruheposition in eine Fronthauben-Aufprallposition anzuheben. Vorzugsweise beträgt dabei der Deformationsabstand in etwa 80 mm. Alternativ oder zusätzlich dazu kann aber auch eine Fronthauben-Anhebung vorgesehen sein, bei der ein durch eine Sensorvorrichtung aktivierbarer Energiespeicher, zum Beispiel eine Zylinder-Kolben-Einheit eine Fronthaube des Fahrzeugs aus einer Fronthauben-Ruheposition in eine dieser gegenüber angehobene Fronthauben-Aufprallposition anhebt, z.B. über eine Zylinder-Kolben-Einheit und/oder eine Federanordnung.

In einer besonders bevorzugten Ausführungsform ist das Deformationselement zweiteilig aus einem mit der Fronthaube, vorzugsweise mit einer Unterseite der Fronthaube, zusammenwirkenden Abstützteil und einem karosserieseitig angeordneten, mit dem Abstützteil zusammenwirkenden Deformationsteil aufgebaut. Dadurch ist das Abstützteil bei einem Fußgängeraufprall auf die Fronthaube relativ zur Fahrzeugkarosserie so absenkbar, dass das Deformationsteil unter gezielter Energieabsorption aus der undeformierten Normalstellung in die deformierte Deformationsstellung überführbar ist.

Ein derartiger Aufbau ist einfach und somit preisgünstig herzustellen, wobei zudem auch eine günstige und vorteilhafte Energieabsorption mit einer gezielten Kraft-Weg-Kennung in Verbindung mit einer gezielten Krafteinleitung möglich ist. Zudem ist ein derartiger Aufbau relativ kompakt und damit insbesondere für beengte Einbausituationen geeignet.

Grundsätzlich kann das Abstützteil auf vielfältige Weise ausgebildet sein. In einer bevorzugten Ausführungsform ist das Abstützteil als ein Elastomerpuffer ausgebildet. Als Elastomer wird vorzugsweise ein Gummimaterial verwendet. In einer weiter vorteilhaften Ausführungsform ist der Elastomerpuffer tannenbaumartig mit einem konischen Kopfteil und einem mit einem Rastprofil versehenen Stammteil ausgebildet. Das Rastprofil ist hier zum Beispiel in Form umlaufenden Nuten oder in Form eines Gewindes ausgebildet. Das Stammteil kann dabei entweder mit der Fronthaube oder mit dem Deformationsteil verbunden sein, zum Beispiel eingesteckt sein oder eingeschraubt sein, wobei ein Gegenrastprofil der Fronthaube oder entsprechend umgekehrt des Deformationsprofils in etwa in einem mittleren Bereich des Stammteils mit dem Rastprofil in Eingriff steht. Dadurch wird erreicht, dass bei einem Fußgängeraufprall auf die Fronthaube das Kopfteil des Elastomerpuffers deformierbar ist und das Rastprofil am Gegenrastprofil durchrutscht sowie über den Elastomerpuffer das Deformationsteil deformierbar ist. Vorteilhaft findet hier bereits eine erste Energieabsorption durch die Deformation des Kopfteils des Elastomerpuffers und anschließend durch das Durchrutschen des am Stammteil ausgebildeten Rastprofils am Gegenrastprofil statt. Damit ergeben sich besonders günstige Verhältnisse bei einer Energieabsorption mit einer gezielten Kraft-Weg-Kennung. Insbesondere wird hierbei die Wucht eines Aufpralls somit noch gezielter und kontrollierter aufgefangen.

In einer alternativen Ausführungsform umfasst das Abstützteil ein Gehäuseteil, in dem ein Kolbenteil in einer Fronthauben-Ruheposition federvorgespannt gehalten und geführt ist. Dabei wirkt das Kolbenteil je nach Einbausituation entweder mit dem Deformationsteil oder mit der Fronthaube zusammen, während das dem Kolbenteil zugeordnete Gehäuseteil entsprechend umgekehrt mit der Fronthaube oder dem Deformationsteil zusammenwirkt. Bei einem Fußgängeraufprall auf die Fronthaube wird das Kolbenteil hier relativ zum Gehäuseteil entgegen die Federvorspannung bewegt, wobei das Deformationsteil anschließend über das Abstützteil deformierbar ist. Die Federvorspannung dient hier vorzugsweise dazu, in der Fronthauben-Ruheposition eine Anlage des Kolben- bzw. Gehäuseteils an der Fronthaube bzw. an der Fahrzeugkarosserie sicherzustellen. Die Federkraft ist hierbei so dimensioniert, dass bei einem Fußgängeraufprall auf jeden Fall vermieden wird, dass die Fronthaube nach einem ersten Absenken wieder unkontrolliert nach oben zurückfedert. Auch mit einem derartigen Aufbau ergeben sich besonders günstige Verhältnisse bei einer Energieabsorption mit einer gezielten Kraft-Weg-Kennung, so dass auch hier die Wucht eines Aufpralls noch gezielter und kontrollierter aufgefangen werden kann.

In einer hierzu besonders bevorzugten Ausführungsform ist mit dem Kolbenteil eine Verriegelungsstange verbunden, die vom Gehäuseteil absteht und in der Fronthauben-Ruheposition mit einem freien Verriegelungsstangenende je nach Einbausituation im Bereich der Fahrzeugkarosserie oder im Bereich des Deformationsteils lösbar festlegbar ist. Die lösbare Festlegung erfolgt dabei so, dass bei einem Fußgängeraufprall auf die Fronthaube und einer Kolbenteilbewegung relativ zum Gehäuseteil das freie Verriegelungsstangenende freigegeben wird. Mit einem derartigen Aufbau wird vorteilhaft erreicht, dass eine Deformation des Deformationsteils erst nach Überschreiten einer bestimmten Schwellenkraft erfolgt.

In einer konkreten Ausführungsform ist zur lösbaren Festlegung des freien Verriegelungsstangenendes an diesem eine nutförmige Ausnehmung vorgesehen, in die zur lösbaren Festlegung der Verriegelungsstange in der Fronthauben-Ruheposition ein im Bereich der Fahrzeugkarosserie oder im Bereich des Deformationsteils angeordnetes Eingriffselement eingreift. Alternativ dazu kann auch jede andere geeignete lösbare Festlegung gewählt werden, zum Beispiel eine Verriegelung oder eine Verklemmung. In einer beispielhaften konkreten Ausführungsform ist die Verriegelungsstange in den Innenraum des Gehäuseteils geführt und an einer Gehäuseteilinnenwand festgelegt, wobei das Kolbenteil um die Verriegelungsstange herum relativ zu dieser verschiebbar angeordnet ist.

Das Deformationsteil des zweiteiligen Deformationselementes ist in einer ersten Ausführungsform als rautenförmiges Rahmenteil, vorzugsweise aus einem Blechmaterial, ausgebildet. Dieses Rahmenteil ist bei der Deformation bei einem Fußgängeraufprall unter gezielter Energieabsorption flach zusammenfaltbar. Ein derartiges Deformationsteil ist einfach herstellbar und somit preisgünstig. Zudem weist es gute Energieabsorptionseigenschaften auf.

Alternativ dazu kann das Deformationselement des zweiteiligen Deformationselementes auch als Stülpelement ausgebildet sein, dessen Basisteil bei einem Fußgängeraufprall durch das Abstützteil unter Energieabsorption gezielt nach unten absenkbar ist. Auch ein derartiges Deformationsteil ist einfach herstellbar und gewährleistet eine gute und gezielte Energieabsorption.

Weiter alternativ ist das Deformationsteil des zweiteiligen Deformationselementes ein deformierbarer Schaumkörper, zum Beispiel aus einem Leichtmetallschaummaterial und/oder einem Kunststoffschaummaterial. Bei einem Fußgängeraufprall wird dieser Schaumkörper durch das Abstützteil unter Energieabsorption gezielt verformt. Ein derartiger Schaumkörper weist besonders gute Energieabsorptionseigenschaften auf und ist daher besonders gut geeignet für eine Energieabsorption mit einer gezielten Kraft-Weg-Kennung.

In einer weiteren alternativen Ausführungsform umfasst das Deformationsteil des zweiteiligen Deformationselementes ein wannenförmig ausgebildetes Wannenteil, das in eine karosserieseitige Wannenteilausnehmung einsetzbar ist. In dem in etwa waagrecht ausgerichteten Wannenboden ist eine Wannenteilöffnung ausgebildet, deren oberer Wannenteil-Öffnungsrand rampenförmig angeschrägt ist. Diesem oberen Wannenteil-Öffnungsrand sind in der Fronthauben-Ruheposition wenigstens ein, bevorzugt zwei Gleitelemente zugeordnet, die unter Ausbildung einer Tiefziehteilöffnung wenigstens teilweise von einem Umbiegebereich eines Tiefziehteils formschlüssig umgriffen sind. Das Tiefziehteil tritt mit einem sich an den Umbiegebereich anschließenden und hülsenartig ausgebildeten Hülsenbereich durch die Wannenteilöffnung hindurch und steht von dieser fingerartig ab. Dabei weisen die Tiefziehteilöffnung und der Hülsenbereich einen geringeren Durchmesser auf als ein im Tiefziehteil-Öffnungsbereich am Umbiegebereich anliegender Teilbereich des Abstützteils. Vorzugsweise ist dieses Abstützteil gebildet durch das Kopfteil eines Elastomerpuffers oder ein Kolbenteil einer Kolbenteil-Gehäuseteil-Einheit. Dadurch wird erreicht, dass bei einem Fußgängeraufprall auf die Fronthaube das Abstützteil unter Aufweitung des Hülsenbereichs wenigstens mit einem Teilbereich zur gezielten Energieabsorption in den Hülsenbereich eintaucht, wobei zu Beginn des Eintauchvorgangs nach Überschreiten einer Schwellenkraft als Initiatorkraft das wenigstens eine Gleitelement zur Freigabe des weiteren Einschubs des Abstützteils in den Hülsenbereich an dem rampenförmigen oberen Wannenteil-Öffnungsrand aufläuft. Auch ein derartiger Aufbau ermöglicht eine besonders vorteilhafte und günstige Energieabsorption mit einer gezielten Kraft-Weg-Kennung, wobei eine gezielte Krafteinleitung in das Deformationsteil stattfindet.

In einer bevorzugten konkreten Ausführungsform ist das wenigstens eine Gleitelement eine Kugel. Mit einer derartigen Kugel lassen sich besonders vorteilhafte Gleiteigenschaften entlang des rampenförmigen oberen Wannenteil-Öffnungsrandes erreichen.

Grundsätzlich ist es möglich, dass das als Deformationselement ausgebildete Abstützelement entlang des gesamten Randbereichs der Fronthaube anordenbar ist. Je nach Einbausituation können diesbezüglich eine Vielzahl derartiger Abstützelemente vorgesehen sein. In einer besonders bevorzugten Ausführungsform kann das Abstützelement auch Teil eines Haubenschlosses sein.

Anhand einer Zeichnung wird die Erfindung näher erläutert.

Es zeigen:
- Fig. 1a bis 1b: jeweils eine schematische Darstellung einer ersten Ausführungsform der erfindungsgemäßen Sicherheitseinrichtung vor und nach einem Fußgängeraufprall,
- Fig. 2a bis 2b: jeweils eine schematische Darstellung einer zweiten Ausführungsform der erfindungsgemäßen Sicherheitseinrichtung vor und nach einem Fußgängeraufprall,
- Fig. 3a bis 3b: jeweils eine schematische Darstellung einer dritten Ausführungsform der erfindungsgemäßen Sicherheitseinrichtung vor und nach einem Fußgängeraufprall,
- Fig. 4a bis 4b: jeweils eine schematische Darstellung einer vierten Ausführungsform der erfindungsgemäßen Sicherheitseinrichtung vor und nach einem Fußgängeraufprall,
- Fig. 5a bis 5b: jeweils eine schematische Darstellung einer fünften Ausführungsform der erfindungsgemäßen Sicherheitseinrichtung vor und nach einem Fußgängeraufprall,
- Fig. 6a bis 6b: jeweils eine schematische Darstellung einer sechsten Ausführungsform der erfindungsgemäßen Sicherheitseinrichtung vor und nach einem Fußgängeraufprall,
- Fig. 7a bis 7b: jeweils eine schematische Darstellung einer siebten Ausführungsform der erfindungsgemäßen Sicherheitseinrichtung vor und nach einem Fußgängeraufprall,
- Fig. 8a bis 8b: jeweils eine schematische Darstellung einer achten Ausführungsform der erfindungsgemäßen Sicherheitseinrichtung vor und nach einem Fußgängeraufprall,
- Fig. 9a bis 9b: jeweils eine schematische Darstellung einer neunten Ausführungsform der erfindungsgemäßen Sicherheitseinrichtung vor und nach einem Fußgängeraufprall,
- Fig. 10a bis 10b: jeweils eine schematische Darstellung einer zehnten Ausführungsform der erfindungsgemäßen Sicherheitseinrichtung vor und nach einem Fußgängeraufprall,
- Fig. 11a bis 11b: jeweils eine schematische Darstellung einer elften Ausführungsform der erfindungsgemäßen Sicherheitseinrichtung vor und nach einem Fußgängeraufprall,
- Fig. 12a bis 12b: jeweils eine schematische Darstellung einer zwölften Ausführungsform der erfindungsgemäßen Sicherheitseinrichtung vor und nach einem Fußgängeraufprall,
- Fig. 13a bis 13b: jeweils eine schematische Darstellung einer dreizehnten Ausführungsform der erfindungsgemäßen Sicherheitseinrichtung vor und nach einem Fußgängeraufprall, und
- Fig. 14a bis 14b: jeweils eine schematische Darstellung einer vierzehnten Ausführungsform der erfindungsgemäßen Sicherheitseinrichtung vor und nach einem Fußgängeraufprall.

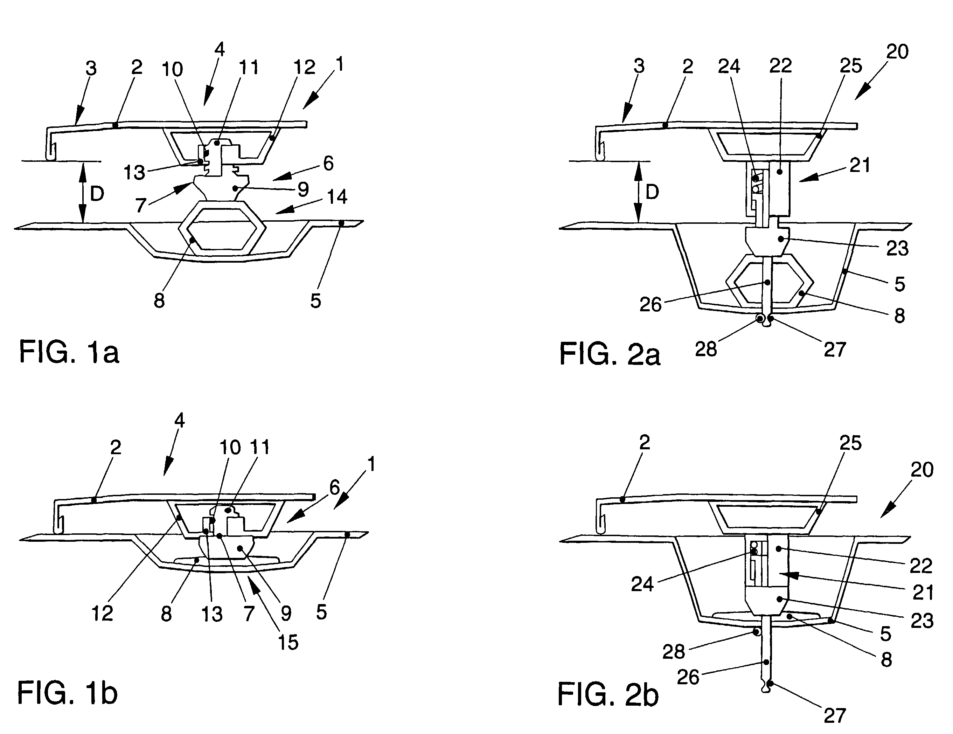

In der Fig. 1a ist eine erste Ausführungsform einer Sicherheitseinrichtung 1 an einem Fahrzeug zum Schutz von Fußgängern schematisch dargestellt. Diese Sicherheitseinrichtung 1 umfasst eine Fronthaube 2, die zwischen einer in der Fig. 1a dargestellten Fronthauben-Ruheposition 3 und einer hier nicht dargestellten Fronthauben-Öffnungsposition verschwenkbar ist. Die Fronthaube 2 stützt sich mit einem Fronthauben-Randbereich 4 über ein als Deformationselement 6 ausgebildetes Abstützelement an einer Fahrzeugkarosserie 5 ab.

In der Darstellung der Fig. 1a ist hier nur beispielsweise ein Ausschnitt eines Fronthauben-Randbereichs 4 mit zugeordnetem Fahrzeugkarosseriebereich dargestellt. Selbstverständlich können entlang des Fronthauben-Randbereichs 4 eine Vielzahl derartiger Deformationselemente 6 als Abstützelemente in Abhängigkeit von der jeweiligen fahrzeugspezifischen Einbausituation vorgesehen sein.

Wie dies der Fig. 1a weiter zu entnehmen ist, ist das Deformationselement zweiteilig aus einem mit einer Unterseite der Fronthaube 2 zusammenwirkenden Elastomerpuffer 7 als Abstützteil und einem karosserieseitig angeordneten, mit dem Elastomerpuffer 7 zusammenwirkenden rautenförmigen Blechrahmen 8 als Deformationsteil aufgebaut.

Wie dies aus der Fig. 1a weiter ersichtlich ist, ist der Elastomerpuffer 7 tannenbaumartig mit einem konischen Kopfteil 9 und einem mit einem Rastprofil 10 versehenen Stammteil 11 ausgebildet. Das Rastprofil 10 kann beispielsweise in der Art eines Gewindes ausgebildet sein oder aber auch durch ringförmig umlaufende Nuten gebildet sein. In der Darstellung der Fig. 1a ist der Stammteil 11 mit einem an der Unterseite der Fronthaube 2 angeordneten Gegenprofilteil 12 gekoppelt, wobei ein Gegenrastprofil 13 des Gegenprofilteils 12 in einem mittleren Bereich des Stammteils 11 mit dem Rastprofil 10 in Eingriff steht.

Wie dies der Darstellung der Fig. 1a weiter zu entnehmen ist, ist die Fronthaube 2 ferner mit einem Deformationsabstand D von vorzugsweise 80 mm oberhalb der Fahrzeugkarosserie 5 angeordnet.

Die Funktionsweise dieser Sicherheitseinrichtung 1 wird nachfolgend anhand der Fig. 1b näher erläutert:

Bei einem Fußgängeraufprall auf die Fronthaube 2 wird zuerst das konische Kopfteil 9 des Elastomerpuffers 7 in etwa pilzförmig deformiert, wobei gleichzeitig das Rastprofil 10 am Gegenrastprofil 13 durchrutscht, so dass das Kopfteil 9 des Elastomerpuffers 7 am Gegenrastprofil 12 anliegt. Gleichzeitig wird dabei auch der rautenförmige Blechrahmen 8 unter Energieabsorption mit gezielter Kraft-Weg-Kennung zusammengefaltet und aus einer in der Fig. 1a dargestellten undeformierten Normalstellung 14 in eine in der Fig. 1b dargestellte deformierte Deformationsstellung 15 überführt, so dass insgesamt gesehen die Fronthaube 2 unter gezielter Energieabsorption aus der Fronthauben-Ruheposition 3 nach unten absenkbar ist.

In der Fig. 2a ist eine alternative, zweite Ausführungsform einer Sicherheitseinrichtung 20 dargestellt. Diese Sicherheitseinrichtung 20 entspricht im wesentlichen derjenigen der Fig. 1a mit dem Unterschied, dass ein Abstützteil 21 hier aus einem Gehäuseteil 22, in dem ein Kolbenteil 23 mittels einer Feder 24 federvorgespannt gehalten und geführt ist. Beispielhaft ist hier das Gehäuseteil 22 an der Unterseite der Fronthaube 2 an einem separaten Profilteil 25 angeordnet. Mittels der Federvorspannung der Feder 24 wird erreicht, dass, wie dies aus der Fig. 2a ersichtlich ist, das Kolbenteil 23 am rautenförmigen Blechteil 8 unter Federvorspannung anliegt.

Wie dies aus der Fig. 2a weiter ersichtlich ist, ist mit dem Abstützteil 21 ferner eine Verriegelungsstange 26 verbunden, die an einer inneren Gehäuseteilwand festgelegt ist und durch das relativ dazu verschiebbare Kolbenteil 23 hindurch aus dem Gehäuseteil 22 herausgeführt ist und von diesem absteht. Die Verriegelungsstange 26 ist in der in der Fig. 2a dargestellten Fronthauben-Ruheposition 3 mit einem freien Verriegelungsstangenende im Bereich der Fahrzeugkarosserie 5 lösbar festgelegt. Zu dieser lösbaren Festlegung ist am freien Verriegelungsstangenende der Verriegelungsstange 26 eine nutförmige Ausnehmung 27 vorgesehen, in die zur lösbaren Festlegung der Verriegelungsstange 26 in der Fronthauben-Ruheposition 3 ein im Bereich der Fahrzeugkarosserie 5 angeordnetes Eingriffselement 28 eingreift.

Die Funktionsweise dieser Sicherheitseinrichtung 20 wird nachfolgend anhand der Fig. 2b näher erläutert:

Bei einem Fußgängeraufprall auf die Fronthaube 2 wird diese mitsamt dem Gehäuseteil 22 entgegen die Federvorspannung der Feder 24 abgesenkt, wodurch das Gehäuseteil 22 in Anlage an das Kolbenteil 23 gelangt. Gleichzeitig wird hierdurch die Verriegelungsstange 26 mit ihrer nutförmigen Ausnehmung 27 außer Eingriff mit dem Eingriffselement 28 gebracht und der rautenförmige Blechrahmen 8 unter gezielter Energieabsorption deformiert, wie dies in Verbindung mit der Fig. 1b der ersten Sicherheitseinrichtung 1 bereits ausführlich erläutert worden ist.

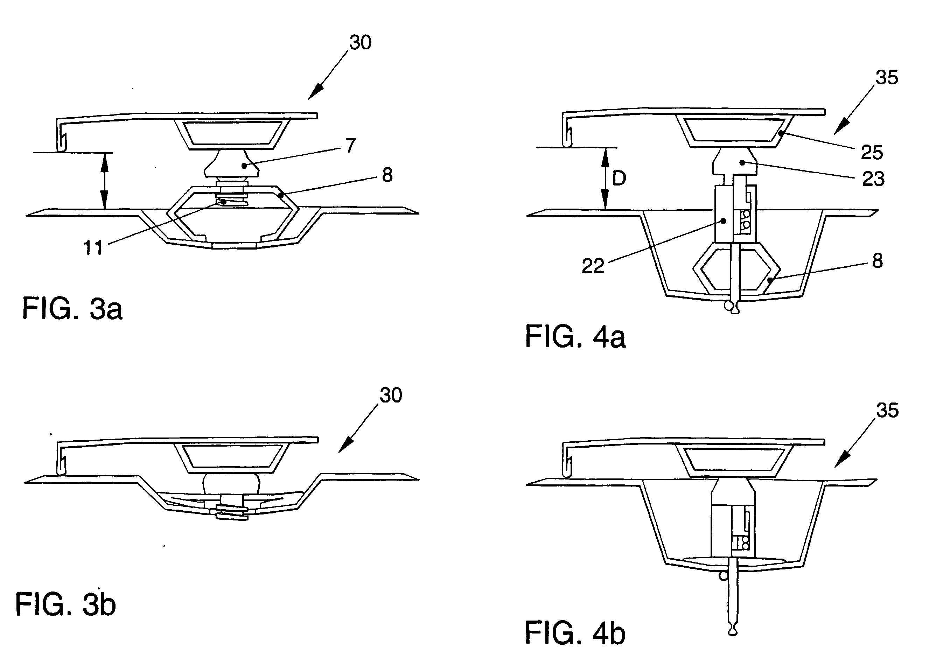

In der Fig. 3a ist eine dritte Ausführungsform einer Sicherheitseinrichtung 30 dargestellt, die im wesentlichen derjenigen der Fig. 1a entspricht. Im Unterschied dazu ist lediglich der Elastomerpuffer 7 mit dem Stammteil 11 am rautenförmigen Blechrahmen 8 angeordnet. Die Funktionsweise entspricht derjenigen der Fig. 1b, so dass hier in Verbindung mit der Fig. 3b nicht mehr näher darauf eingegangen wird.

In der Fig. 4a ist eine vierte Ausführungsform einer Sicherheitseinrichtung 35 dargestellt, die im wesentlichen derjenigen der Fig. 2a entspricht mit dem Unterschied, dass hier das Kolbenteil 23 dem Profilteil 25 und das Gehäuseteil 22 dem rautenförmigen Blechrahmen 8 zugeordnet ist.

Die Funktionsweise dieser Sicherheitseinrichtung 35 entspricht derjenigen der Sicherheitseinrichtung 20 der Fig. 2a, so dass hierauf ebenfalls nicht mehr näher eingegangen wird.

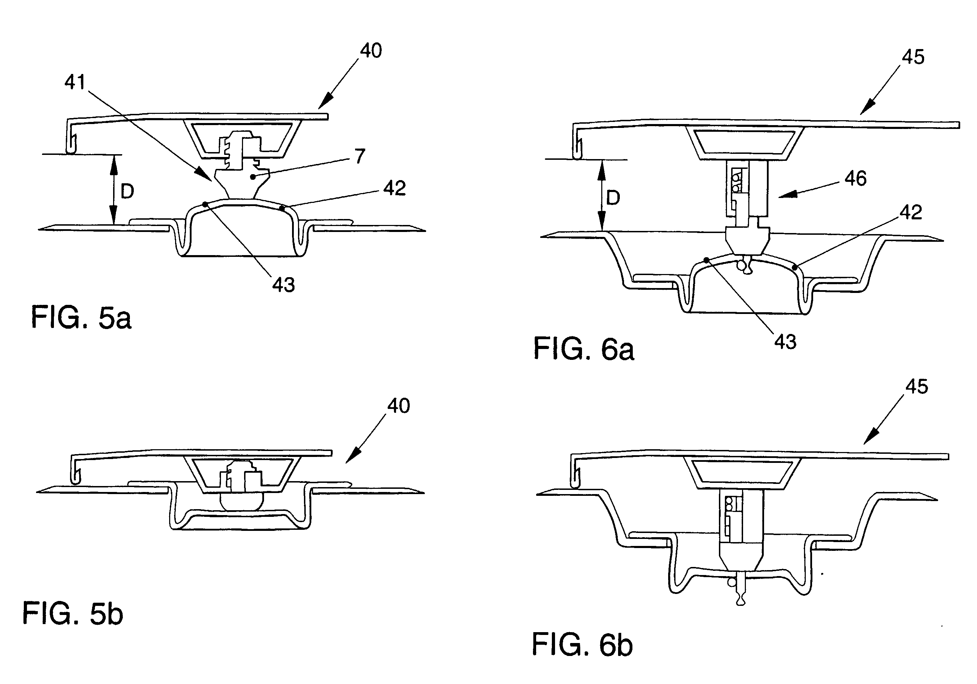

In der Fig. 5a ist eine fünfte Ausführungsform einer Sicherheitseinrichtung 40 dargestellt, die im wesentlichen dem Aufbau der Fig. 1a entspricht mit dem Unterschied, dass das Deformationsteil eines zweiteiligen Deformationselementes 41 als Stülpelement 42 ausgebildet ist. Ein Basisteil 43 des Stülpelements 42 wird bei einem Fußgängeraufprall durch den Elastomerpuffer 7 in analoger Weise zu der Ausführungsform der Fig. 1a und 1b unter Energieabsorption gezielt nach unten abgesenkt, wie dies schematisch in der Fig. 5b dargestellt ist.

In der Fig. 6a ist eine sechste Ausführungsform einer Sicherheitseinrichtung 45 dargestellt, das im wesentlichen dem Aufbau der Fig. 2a der Sicherheitseinrichtung 20 entspricht mit dem Unterschied, dass hier entsprechend der Fig. 5a als Deformationsteil eines zweiteiligen Deformationselementes 46 ein Stülpelement 42 entsprechend der Fig. 5a vorgesehen ist. Die Funktionsweise entspricht derjenigen, wie sie in Verbindung mit der Fig. 2b und der Fig. 5b beschrieben worden ist, so dass hierauf nicht mehr im Detail näher eingegangen wird.

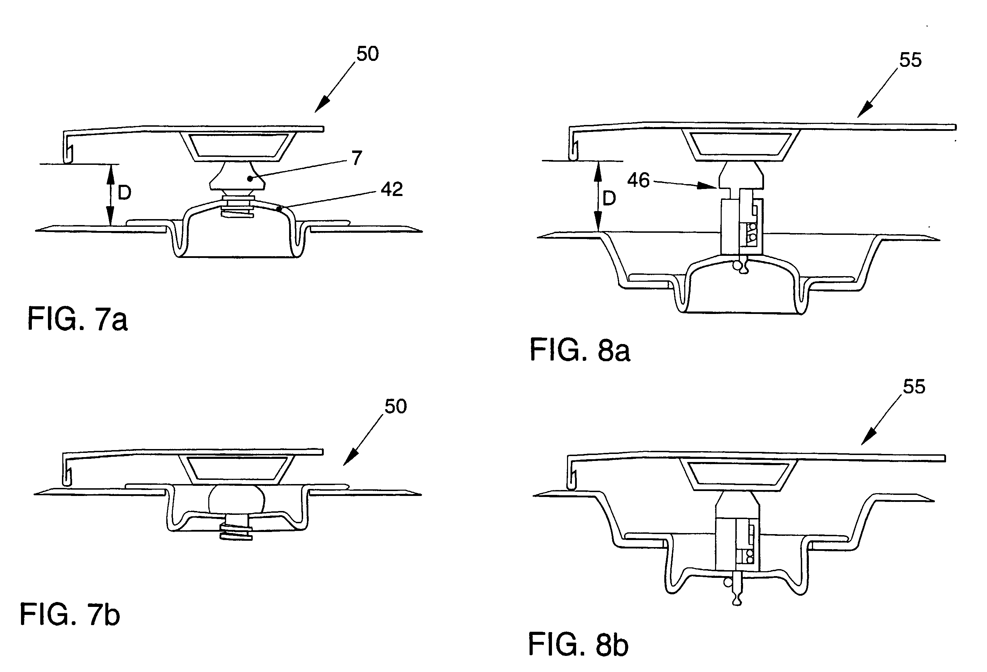

Die Sicherheitseinrichtung 50 der Fig. 7a entspricht vom Aufbau her im wesentlichen demjenigen der Fig. 5a mit dem Unterschied, dass hier der Elastomerpuffer 7 direkt am Stülpelement 42 angebracht ist.

In der Fig. 8a ist eine Sicherheitseinrichtung 55 dargestellt, deren Aufbau im wesentlichen derjenigen der Sicherheitseinrichtung 45 der Fig. 6a entspricht, mit dem Unterschied, dass hier das Abstützteil des Deformationselementes 46 umgekehrt angeordnet ist. Die Funktionsweise entspricht derjenigen, wie sie in Verbindung mit der Fig. 6b geschildert wurde, so dass hierauf nicht mehr näher eingegangen wird.

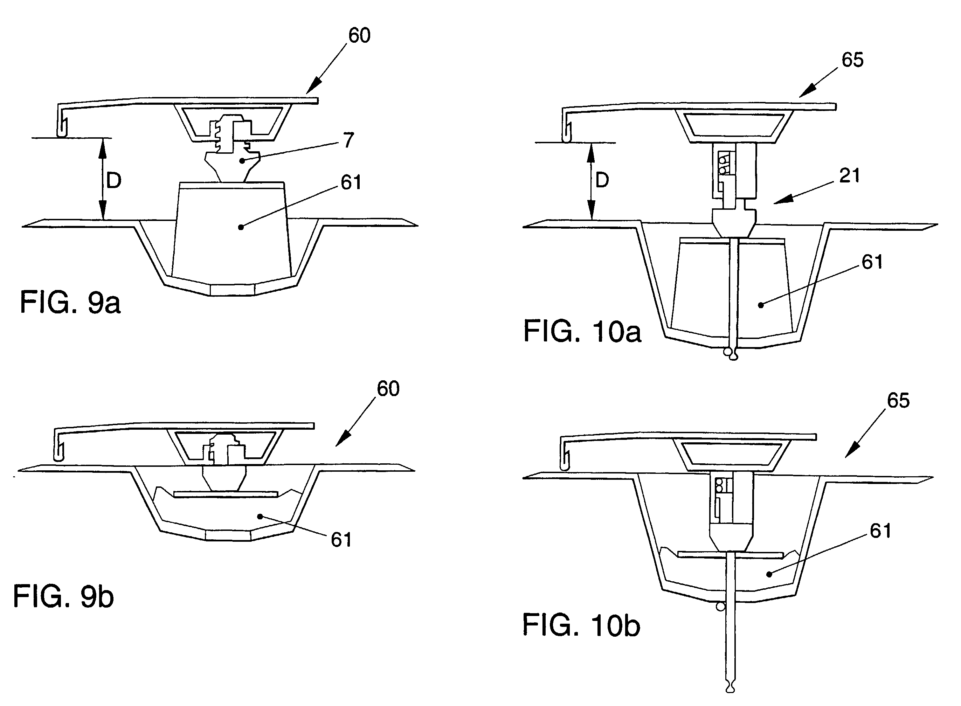

In den Fig. 9a und 10a sind weitere alternative Ausführungsformen einer Sicherheitseinrichtung 60 (Fig. 9a) mit einem Elastomerpuffer 7 als Abstützteil und einer Sicherheitseinrichtung 65 mit einem Abstützteil 21 dargestellt. Als Deformationsteil ist hier jeweils ein deformierbarer Schaumkörper 61 vorgesehen, der bei einem Fußgängeraufprall unter Energieabsorption gezielt verformbar ist, wie dies aus den Fig. 9b und 10b ersichtlich ist.

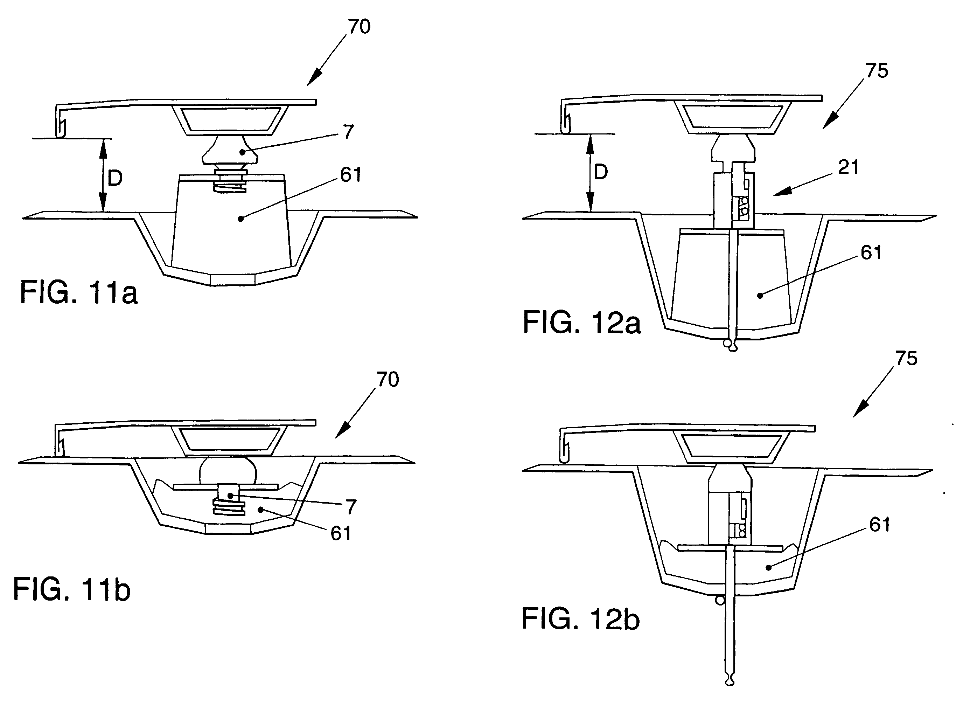

In den Fig. 11a und 12a sind jeweils alternative Ausführungsformen zu den Sicherheitseinrichtungen 60 und 65 der Fig. 9a und 10a schematisch dargestellt. Bei diesen Sicherheitseinrichtungen 70, 75 ist die Anordnung des Elastomerpuffers 7 (Fig. 11a) und des Abstützteils 21 (Fig. 12a) entsprechend umgekehrt zu den Ausführungsformen gemäß Fig. 9a und Fig. 10a. Ansonsten entspricht die Funktionsweise derjenigen, wie sie in Verbindung mit den zuvor beschriebenen Ausführungsformen näher erläutert wurde, so dass hierauf nicht mehr im Detail eingegangen wird.

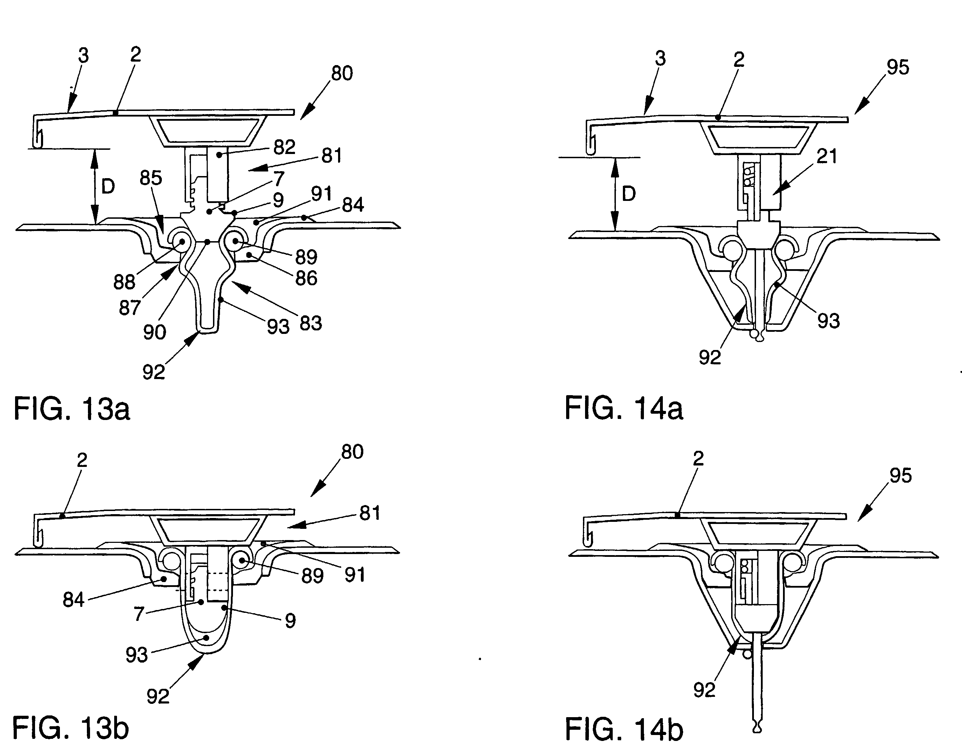

In der Fig. 13a ist schließlich eine weitere alternative Ausführungsform einer Sicherheitseinrichtung 80 dargestellt. Ein Deformationselement 81 ist hier zweiteilig aufgebaut und besteht aus einem in einem Zylindergehäuse 82 gehaltenen Elastomerpuffer 7 und einem Deformationsteil 83. Dieses Deformationsteil 83 umfasst ein wannenförmig ausgebildetes Wannenteil 84, das in eine karosserieseitige Wannenteil-Ausnehmung 85 eingesetzt ist. Im in etwa waagrecht ausgerichteten Wannenboden 86 ist eine Wannenteilöffnung 87 ausgebildet, deren oberer Wannenteil-Öffnungsrand 88 rampenförmig angeschrägt ist. Diesem oberen Wannenteil-Öffnungsrand 88 sind in der in der Fig. 13a dargestellten Fronthauben-Ruheposition 3 zwei Kugeln 89 als Gleitelemente zugeordnet, die unter Ausbildung einer Tiefziehteilöffnung 90 teilweise von einem Umbiegebereich 91 eines Tiefziehteils 92 formschlüssig umgriffen sind. Das Tiefziehteil 92 tritt mit einem sich an den Umbiegebereich 21 anschließenden und hülsenartig ausgebildeten Hülsenbereich 93 durch die Wannenteilöffnung 87 hindurch und steht von dieser fingerartig ab, wobei die Tiefziehteilöffnung 90 und der Hülsenbereich 93 einen geringeren Durchmesser aufweisen als ein im Tiefziehteil-Öffnungsbereich am Umbiegebereich anliegendes Kopfteil 9 des Elastomerpuffers 10.

Die Funktionsweise dieser Sicherheitseinrichtung 80 wird nachfolgend anhand der Fig. 13b näher erläutert:

Bei einem Fußgängeraufprall auf die Fronthaube 2 taucht das Kopfteil 10 des Elastomerpuffers 7 nach dem Überschreiten einer Schwellenkraft als Initiatorkraft in das Tiefziehteil 92 unter Aufweitung des Hülsenbereichs 93 zur gezielten Energieabsorption ein, wobei zu Beginn des Eintauchvorgangs die Kugeln zur Freigabe des weiteren Einschubs des Kopfteils in den Hülsenbereich 93 an dem rampenförmigen oberen Wannenteil-Öffnungsrand 88 auflaufen.

In der Fig. 14a ist eine der Fig. 13a im wesentlichen entsprechende Sicherheitseinrichtung 95 dargestellt, die nach dem gleichen Prinzip arbeitet, jedoch anstelle des Elastomerpuffers 7 das Abstützteil 21 entsprechend zum Beispiel der Fig. 2a verwendet, so dass hierauf nicht mehr näher im Detail eingegangen wird.

### BEZUGSZEICHENLISTE

- 1: Sicherheitseinrichtung
- 2: Fronthaube
- 3: Fronthauben-Ruheposition
- 4: Fronthauben-Randbereich
- 5: Fahrzeugkarosserie
- 6: Deformationselement
- 7: Elastomerpuffer
- 8: Blechrahmen, rautenförmig
- 9: Kopfteil
- 10: Rastprofil
- 11: Stammteil
- 12: Gegenprofilteil
- 13: Gegenrastprofil
- 14: undeformierte Normalstellung
- 15: deformierte Deformationsstellung
- 20: Sicherheitseinrichtung
- 21: Abstützteil
- 22: Gehäuseteil
- 23: Kolbenteil
- 24: Feder
- 25: Profilteil
- 26: Verriegelungsstange
- 27: nutförmige Ausnehmung
- 28: Eingriffselement
- 30: Sicherheitseinrichtung
- 35: Sicherheitseinrichtung
- 40: Sicherheitseinrichtung
- 41: Deformationselement
- 42: Stülpelement
- 43: Basisteil
- 45: Sicherheitseinrichtung
- 46: Deformationselement
- 50: Sicherheitseinrichtung
- 55: Sicherheitseinrichtung
- 60: Sicherheitseinrichtung
- 61: Schaumkörper
- 65: Sicherheitseinrichtung
- 70: Sicherheitseinrichtung
- 75: Sicherheitseinrichtung
- 80: Sicherheitseinrichtung
- 81: Deformationselement
- 82: Zylindergehäuse
- 83: Deformationsteil
- 84: Wannenteil
- 85: Wannenteil-Ausnehmung
- 86: Wannenboden
- 87: Wannenteilöffnung
- 88: Wannenteil-Öffnungsrand
- 89: Kugel
- 90: Tiefziehteilöffnung
- 91: Umbiegebereich
- 92: Tiefziehteil
- 93: Hülsenbereich
- 95: Sicherheitseinrichtung
- D: Deformationsteil

## Patentansprüche

1. Sicherheitseinrichtung an einem Fahrzeug zum Schutz von Fußgängern mit einer zwischen einer Fronthauben-Ruheposition und einer Fronthauben-Öffnungsposition verschwenkbaren Fronthaube, die sich im Fronthauben-Randbereich über wenigstens ein Abstützelement an einer Fahrzeugkarosserie abstützt, wobei das Abstützelement als ein zweiteiliges Deformationselement (6; 41; 46; 81) ausgebildet ist, das ein mit der Fronthaube (2) zusammenwirkendes Abstützteil (7; 21) und ein karosserieseitig angeordnetes, mit dem Abstützteil (7; 21) zusammenwirkendes Deformationsteil (8; 42; 61; 83) aufweist dergestalt, dass das Abstützteil (7; 21) bei einem Fußgängeraufprall auf die Fronthaube (2) relativ zur Fahrzeugkarosserie (5) gezielt nach unten absenkbar ist, so dass das Deformationsteil (8; 42; 61; 83) unter Energieabsorption aus einer undeformierten Normalstellung (14) in eine deformierte Deformationsstellung (15) überführbar ist, **dadurch gekennzeichnet, dass** das Abstützteil ein Elastomerpuffer (7) ist oder dass das Abstützteil (21) ein Gehäuseteil (22) umfasst, in dem ein Kolbenteil (23) in einer Fronthauben-Ruheposition (3) federvorgespannt gehalten und geführt ist.

2. Sicherheitseinrichtung nach Anspruch 1, **dadurch gekennzeichnet, dass** die Fronthaube (2) in der Fronthauben-Ruheposition (3) mit einem Deformationsabstand (D), vorzugsweise mit einem Deformationsabstand von in etwa 80 mm, beabstandet oberhalb der Fahrzeugkarosserie (5) angeordnet ist.

3. Sicherheitseinrichtung nach Anspruch 1 oder 2, **dadurch gekennzeichnet, dass** der Elastomerpuffer (7) tannenbaumartig mit einem konischen Kopfteil (9) und einem mit einem Rastprofil (10), vorzugsweise in Form umlaufender Nuten oder eines Gewindes, versehenen Stammteil (11) ausgebildet ist, dass der Stammteil (11) mit der Fronthaube (2) oder dem Deformationsteil (8; 42; 61) verbunden ist, dass ein Gegenrastprofil (13) der Fronthaube (2) oder des Deformationsteils (8; 42; 61; 83) in etwa in einem mittleren Bereich des Stammteils (11) mit dem Rastprofil (10) in Eingriff steht, und dass bei einem Fußgängeraufprall auf die Fronthaube (2) das Kopfteil (9) des Elastomerpuffers (7) deformierbar ist und das Rastprofil (10) am Gegenrastprofil (13) durchrutscht sowie über den Elastomerpuffer (7) das Deformationsteil (8; 42; 61; 83) deformierbar ist.

4. Sicherheitseinrichtung nach Anspruch 1 oder 2, **dadurch gekennzeichnet, dass** das Kolbenteil (23) entweder mit dem Deformationsteil (8; 42; 61; 83) oder der Fronthaube (2) und das Gehäuseteil (22) entsprechend umgekehrt mit der Fronthaube (2) oder dem Deformationsteil (8; 42; 61) zusammenwirkt, und dass bei einem Fußgängeraufprall auf die Fronthaube (2) das Kolbenteil (23) relativ zum Gehäuseteil (22) entgegen die Federvorspannung bewegbar ist und das Deformationsteil (8; 42; 61; 83) über das Abstützteil (21) deformierbar ist.

5. Sicherheitseinrichtung nach Anspruch 4, **dadurch gekennzeichnet, dass** mit dem Abstützteil (21) eine Verriegelungsstange (26) fest verbunden ist, die vom Gehäuseteil (22) absteht und in der Fronthauben-Ruheposition (3) mit einem freien Verriegelungsstangenende im Bereich der Fahrzeugkarosserie (5) oder im Bereich des Deformationsteils (8; 42; 61; 83) lösbar festlegbar ist dergestalt, dass bei einem Fußgängeraufprall auf die Fronthaube (2) und einer Kolbenteilbewegung relativ zum Gehäuseteil (22) die lösbare Festlegung des freien Verriegelungsstangenendes freigebbar ist.

6. Sicherheitseinrichtung nach Anspruch 5, **dadurch gekennzeichnet, dass** am freien Verriegelungsstangenende eine nutförmige Ausnehmung (27) vorgesehen ist, in die zur lösbaren Festlegung der Verriegelungsstange (26) in der Fronthauben-Ruheposition (3) ein im Bereich der Fahrzeugkarosserie (5) oder im Bereich des Deformationsteils (8; 42; 61; 83) angeordnetes Eingriffselement eingreift, und dass die Verriegelungsstange vorzugsweise durch das Kolbenteil hindurch geführt und an einer Gehäuseteilinnenwand festgelegt ist.

7. Sicherheitseinrichtung nach einem der Ansprüche 1 bis 6, **dadurch gekennzeichnet, dass** das Deformationsteil des zweiteiligen Deformationselementes als rautenförmiges Rahmenteil (8), vorzugsweise aus Blech ausgebildet ist, das bei der Deformation bei einem Fußgängeraufprall unter gezielter Energieabsorption flach zusammenfaltbar ist.

8. Sicherheitseinrichtung nach einem der Ansprüche 1 bis 6, **dadurch gekennzeichnet, dass** das Deformationsteil des zweiteiligen Deformationselementes als Stülpelement (42) ausgebildet ist, dessen Basisteil (43) bei einem Fußgängeraufprall durch den Abstützteil (7; 21) unter Energieabsorption gezielt nach unten absenkbar ist.

9. Sicherheitseinrichtung nach einem der Ansprüche 1 bis 6, **dadurch gekennzeichnet, dass** das Deformationsteil des zweiteiligen Deformationselementes ein deformierbarer Schaumkörper (61) ist, vorzugsweise aus einem Leichtmetallschaum- und/oder einem Kunststoffschaummaterial, der bei einem Fußgängeraufprall durch das Abstützteil (7; 21) unter Energieabsorption gezielt verformbar ist.

10. Sicherheitseinrichtung nach einem der Ansprüche 1 bis 6, **dadurch gekennzeichnet, dass** das Deformationsteil (83) des zweiteiligen Deformationselementes (81) ein wannenförmig ausgebildetes Wannenteil (84) umfasst, das in eine karosserieseitige Wannenteil-Ausnehmung (85) einsetzbar ist, dass im in etwa waagrecht ausgerichteten Wannenboden (86) eine Wannenteilöffnung (87) ausgebildet ist, deren oberer Wannenteil-Öffnungsrand (88) rampenförmig angeschrägt ist, dass dem oberen Wannenteil-Öffnungsrand (88) in der Fronthauben-Ruheposition (3) wenigstens ein, bevorzugt zwei Gleitelemente (89) zugeordnet sind, die unter Ausbildung einer Tiefziehteilöffnung (90) wenigstens teilweise von einem Umbiegebereich (91) eines Tiefziehteils (92) formschlüssig umgriffen sind, dass das Tiefziehteil (92) mit einem sich an den Umbiegebereich (91) anschließenden und hülsenartig ausgebildeten Hülsenbereich (93) durch die Wannenteilöffnung (87) durchtritt und von dieser fingerartig absteht, dass die Tiefziehteilöffnung (90) und der Hülsenbereich (93) einen geringeren Durchmesser aufweisen als ein im Tiefziehteil-Öffnungsbereich am Umbiegebereich (91) anliegender Teilbereich des Abstützteils (7; 21), vorzugsweise ein Kopfteil (9) eines Elastomerpuffers (7) oder ein Kolbenteil (23) dergestalt, dass bei einem Fußgängeraufprall auf die Fronthaube (2) das Abstützteil (7; 21) unter Aufweitung des Hülsenbereichs (93) wenigstens mit einem Teilbereich zur gezielten Energieabsorption in den Hülsenbereich (93) eintaucht, wobei zu Beginn des Eintauchvorgangs nach Überschreiten einer Schwellenkraft als Initiatorkraft das wenigstens eine Gleitelement (89) zur Freigabe des weiteren Einschubs des Abstützteils (7; 21) in den Hülsenbereich (93) an dem rampenförmigen oberen Wannenteil-Öffnungsrand (88) aufläuft.

11. Sicherheitseinrichtung nach Anspruch 10, **dadurch gekennzeichnet, dass** das Gleitelement eine Kugel (89) ist.

12. Sicherheitseinrichtung nach einem der Ansprüche 1 bis 11, **dadurch gekennzeichnet, dass** das als Deformationselement (6; 41; 46; 81) ausgebildete Abstützelement Teil eines Haubenschlosses ist.

## Claims

1. Safety device on a vehicle for the protection of pedestrians, with a front bonnet which can be pivoted between a front-bonnet rest position and a front-bonnet open position and is supported in the edge region of the front bonnet on a vehicle body by means of at least one supporting element, the supporting element being formed as a two-part deformation element (6; 41; 46; 81), which has a supporting part (7; 21), interacting with the front bonnet (2), and a deformation part (8; 42; 61; 83), arranged on the body and interacting with the supporting part (7; 21), in such a way that, in the event of impact of the front bonnet (2) with a pedestrian, the supporting part (7; 21) can be lowered downwards in a deliberate manner in relation to the vehicle body (5), so that the deformation part (8; 42; 61; 83) can be transferred from an undeformed normal position (14) into a deformed deformation position (15) while absorbing energy, **characterized in that** the supporting part is an elastomer buffer (7) or **in that** the supporting part (21) comprises a housing part (22), in which a piston part (23) is held in a spring-biased manner and guided in a front-bonnet rest position (3).

2. Safety device according to Claim 1, **characterized in that**, in the front-bonnet rest position (3), the front bonnet (2) is arranged at a distance above the vehicle body (5) with a deformation spacing (D), preferably with a deformation spacing of approximately 80 mm.

3. Safety device according to Claim 1 or 2, **characterized in that** the elastomer buffer (7) is formed in a firtree-like manner with a conical head part (9) and a stem part (11), which is provided with a latching profile (10), preferably in the form of peripheral grooves or a thread, **in that** the stem part (11) is connected to the front bonnet (2) or the deformation part (8; 42; 61), **in that** a mating latching profile (13) of the front bonnet (2) or of the deformation part (8; 42; 61; 83) is in engagement with the latching profile (10) approximately in a middle region of the stem part (11), and **in that**, in the event of impact of the front bonnet (2) with a pedestrian, the head part (9) of the elastomer buffer (7) is deformable and the latching profile (10) slips through the mating latching profile (13) and the deformation part (8; 42; 61; 83) is deformable via the elastomer buffer (7).

4. Safety device according to Claim 1 or 2, **characterized in that** the piston part (23) interacts either with the deformation part (8; 42; 61; 83) or the front bonnet (2) and the housing part (22) correspondingly interacts conversely with the front bonnet (2) or the deformation part (8; 42; 61), and **in that**, in the event of impact of the front bonnet (2) with a pedestrian, the piston part (23) is movable in relation to the housing part (22) counter to the spring biasing and the deformation part (8; 42; 61; 83) is deformable via the supporting part (21).

5. Safety device according to Claim 4, **characterized in that** firmly connected to the supporting part (21) is a locking bar (26), which protrudes from the housing part (22) and, in the front-bonnet rest position (3), can be releasably fixed with a free locking bar end in the region of the vehicle body (5) or in the region of the deformation part (8; 42; 61; 83) in such a way that, in the event of impact of the front bonnet (2) with a pedestrian and movement of the piston part in relation to the housing part (22), the releasable fixing of the free locking bar end is releasable.

6. Safety device according to Claim 5, **characterized in that** provided on the free locking bar end is a groove-shaped recess (27), in which an engaging element arranged in the region of the vehicle body (5) or in the region of the deformation part (8; 42; 61; 83) engages for the releasable fixing of the locking bar (26) in the front-bonnet rest position (3), and **in that** the locking bar is preferably guided through the piston part and fixed on an inner wall of the housing part.

7. Safety device according to one of Claims 1 to 6, **characterized in that** the deformation part of the two-part deformation element is formed as a rhombic frame part (8), preferably made of sheet metal, which in the case of deformation in the event of impact with a pedestrian, is collapsible to a flat form, while deliberately absorbing energy.

8. Safety device according to one of Claims 1 to 6, **characterized in that** the deformation part of the two-part deformation element is formed as a reverse-drawn element (42), the base part (43) of which is lowerable downwards in a deliberate manner by the supporting part (7; 21) in the event of impact with a pedestrian, while absorbing energy.

9. Safety device according to one of Claims 1 to 6, **characterized in that** the deformation part of the two-part deformation element is a deformable foam body (61), preferably made of a lightweight metal-foam and/or a plastic-foam material which, in the event of impact with a pedestrian, is deliberately deformable by the supporting part (7; 21), while absorbing energy.

10. Safety device according to one of Claims 1 is 6, **characterized in that** the deformation part (83) of the two-part deformation element (81) comprises a trough part (84), which is formed in a trough-shaped manner and can be inserted into a trough-part recess (85) on the body, **in that** in the approximately horizontally aligned trough base (86) there is formed a trough part opening (87), the upper trough-part opening rim (88) of which is bevelled in the form of a ramp, **in that** the upper trough-part opening rim (88) is assigned in the front-bonnet rest position (3) at least one, preferably two, sliding elements (89), which are at least partly enclosed with a form fit by a bent-around region (91) of a deep-drawn part (92), while forming a deep-drawn part opening (90), **in that** the deep-drawn part (92) passes with a sleeve region (93), adjoining the bent-around region (91) and formed in a sleeve-like manner, through the trough part opening (87) and protrudes from the latter in a finger-like manner, **in that** the deep-drawn part opening (90) and the sleeve region (93) have a smaller diameter than a partial region of the supporting part (7; 21) bearing against the bent-around region (91) in the region of the opening of the deep-drawn part, preferably a head part (9) of an elastomer buffer (7) or a piston part (23), in such a way that, in the event of impact of the front bonnet (2) with a pedestrian, the supporting part (7; 21) enters at least with a partial region into the sleeve region (93), while widening the sleeve region (93), for deliberate energy absorption, the at least one sliding element (89) running up on the ramp-shaped upper trough-part opening rim (88) at the beginning of the entering process, after exceeding a threshold force, as an initiating force, to release the further pushing-in of the supporting part (7; 21) into the sleeve region (93).

11. Safety device according to Claim 10, **characterized in that** the sliding element is a ball (89).

12. Safety device according to one of Claims 1 to 11, **characterized in that** the supporting element formed as a deformation element (6; 41; 46; 81) is part of a bonnet lock.

## Revendications

1. Dispositif de sécurité sur un véhicule pour la protection de piétons, comprenant un capot pouvant pivoter entre une position de repos du capot et une position d'ouverture du capot, qui s'appuie dans la région du bord du capot par le biais d'au moins un élément sur une carrosserie de véhicule, l'élément de support étant réalisé sous forme d'élément de déformation en deux parties (6, 41 ; 46 ; 81), qui présente une partie de support (7 ; 21) coopérant avec le capot (2) et une partie de déformation (8 ; 42 ; 61 ; 83) coopérant avec la partie de support (7 ; 21), disposée du côté de la carrosserie, de telle sorte que la partie de support (7 ; 21) en cas de collision de piétons avec le capot (2) puisse être abaissée vers le bas de manière ciblée par rapport à la carrosserie du véhicule (5), de sorte que la partie de déformation (8 ; 42 ; 61 ; 83) puisse être transférée par absorption d'énergie d'une position normale non déformée (14) dans une position de déformation déformée (15), **caractérisé en ce que** la partie de support est un tampon en élastomère (7) ou **en ce que** la partie de support (21) comprend une partie de boîtier (22) dans laquelle une partie de piston (23) est maintenue par la précontrainte d'un ressort et est guidée dans une position de repos du capot (3).

2. Dispositif de sécurité selon la revendication 1, **caractérisé en ce que** le capot (2) est disposé dans la position de repos du capot (3) au-dessus de la carrosserie du véhicule (5) de manière espacé d'une distance de déformation (D), de préférence d'une distance de déformation d'environ 80 mm.

3. Dispositif de sécurité selon la revendication 1 ou 2, **caractérisé en ce que** le tampon en élastomère (7) est réalisé sous forme de sapin de Noël avec une partie de tête conique (9) et une partie de base (11) pourvue d'un profilé d'encliquetage (10), de préférence sous forme de rainures périphériques ou d'un filetage, **en ce que** la partie de base (11) est connectée au capot (2) ou à la partie de déformation (8 ; 42 ; 61), **en ce qu'**un profilé d'encliquetage conjugué (13) du capot (2) ou de la partie de déformation (8 ; 42 ; 61 ; 83) est en prise dans une région approximativement centrale de la partie de base (11) avec le profilé d'encliquetage (10), et **en ce que** dans le cas d'une collision de piétons avec le capot (2), la partie de tête (9) du tampon en élastomère (7) peut être déformée et le profilé d'encliquetage (10) glisse sur le profilé d'encliquetage conjugué (13) et la partie de déformation (8 ; 42 ; 61 ; 83) peut être déformée par le biais du tampon en élastomère (7).

4. Dispositif de sécurité selon la revendication 1 ou 2, **caractérisé en ce que** la partie de piston (23) coopère soit avec la partie de déformation (8 ; 42 ; 61 ; 83) ou le capot (2) et la partie de boîtier (22) coopère de manière correspondante mais inversement avec le capot (2) ou avec la partie de déformation (8 ; 42 ; 61), et **en ce que**, dans le cas d'une collision d'un piéton avec le capot (2), la partie de piston (23) peut être déplacée par rapport à la partie de boîtier (22) à l'encontre de la précontrainte du ressort et la partie de déformation (8 ; 42 ; 61 ; 83) peut être déformée par le biais de la partie de support (21).

5. Dispositif de sécurité selon la revendication 4, **caractérisé en ce qu'**une tige de verrouillage (26) est fixement connectée à la partie de support (21), dépasse de la partie de boîtier (22) et, dans la position de repos du capot (3), peut être fixée de manière desserrable avec une extrémité de tige de verrouillage dans la région de la carrosserie du véhicule (5) ou dans la région de la partie de déformation (8 ; 42 ; 61 ; 83), de telle sorte que lors d'une collision d'un piéton avec le capot (2) et d'un mouvement de la partie de piston par rapport à la partie de boîtier (22), la fixation desserrable de l'extrémité libre de la tige de verrouillage puisse être libérée.

6. Dispositif de sécurité selon la revendication 5, **caractérisé en ce que** l'on prévoit à l'extrémité de la tige de verrouillage un évidement (27) en forme de rainure dans lequel vient en prise un élément d'engagement disposé dans la région de la carrosserie du véhicule (5) ou dans la région de la partie de déformation (8 ; 42 ; 61 ; 83) en vue de la fixation desserrable de la tige de verrouillage (26) dans la position de repos du capot (3), et **en ce que** la tige de verrouillage est de préférence guidée à travers la partie de piston et est fixée sur une paroi interne de la partie de boîtier.

7. Dispositif de sécurité selon l'une quelconque des revendications 1 à 6, **caractérisé en ce que** la partie de déformation de l'élément de déformation en deux parties est réalisée sous la forme d'une partie de châssis (8) en forme de losange, de préférence sous forme de tôle, qui peut être repliée à plat au cours de la déformation en cas de collision avec un piéton, avec absorption d'énergie.

8. Dispositif de sécurité selon l'une quelconque des revendications 1 à 6, **caractérisé en ce que** la partie de déformation de l'élément de déformation en deux parties est réalisée sous la forme d'un élément embouti (42), dont la partie de base (43) peut être abaissée vers le bas par la partie de support (7 ; 21) en absorbant l'énergie en cas de collision avec un piéton.

9. Dispositif de sécurité selon l'une quelconque des revendications 1 à 6, **caractérisé en ce que** la partie de déformation de l'élément de déformation en deux parties est un corps en mousse déformable (61), de préférence constitué d'un matériau en mousse de métal léger et/ou en mousse de plastique, qui peut être déformé de manière ciblée par la partie de support (7 ; 21) en absorbant l'énergie en cas d'une collision avec un piéton.

10. Dispositif de sécurité selon l'une quelconque des revendications 1 à 6, **caractérisé en ce que** la partie de déformation (83) de l'élément de déformation en deux parties (81) comprend une partie de cuvette (84) réalisée en forme de cuvette, qui peut être insérée dans un évidement de la partie de cuvette (85) du côté de la carrosserie, **en ce que** dans le fond de la cuvette (86) orienté approximativement horizontalement est réalisée une ouverture de partie de cuvette (87) dont le bord d'ouverture supérieur (88) de la partie de cuvette est biseauté en forme de rampe, **en ce que** l'on associe au bord d'ouverture supérieur (88) de la partie de cuvette, dans la position de repos du capot (3), au moins un, de préférence deux éléments de glissement (89) qui sont entourés par engagement positif au moins en partie par une région de repliement (91) d'une partie emboutie (92) en formant une ouverture de partie emboutie (90), **en ce que** la partie emboutie (92), avec une région de douille (93) se raccordant à la région de repliement (91) et réalisée en forme de douille, traverse l'ouverture de partie de cuvette (87) et dépasse à la façon d'un doigt hors de celle-ci, **en ce que** l'ouverture de la partie emboutie (90) et la région de douille (93) présentent un diamètre plus petit qu'une région partielle de la partie de support (7 ; 21) s'appliquant, dans la région de l'ouverture de la partie emboutie, sur la région de repliement (91), de préférence une partie de tête (9) d'un tampon en élastomère (7) ou une partie de piston (23), de telle sorte que dans le cas d'une collision d'un piéton avec le capot (2), la partie de support (7 ; 21) s'enfonce en élargissant la région de douille (93) au moins avec une région partielle dans la région de douille (93) en vue d'absorber l'énergie, où, au début de l'opération d'enfoncement, après le dépassement d'une force de gonflement servant de force d'amorçage, l'au moins un élément de glissement (89) roule, en vue d'autoriser l'enfoncement supplémentaire de la partie de support (7 ; 21) dans la région de la douille (93), sur le bord d'ouverture supérieur de la partie de cuvette (88) en forme de rampe.

11. Dispositif de sécurité selon la revendication 10, **caractérisé en ce que** l'élément de glissement est une bille (89).

12. Dispositif de sécurité selon l'une quelconque des revendications 1 à 11, **caractérisé en ce que** l'élément de support réalisé sous forme d'un élément de déformation (6 ; 41 ; 46 ; 81) fait partie d'une serrure de capot.
